**Europäisches Patentamt**

(19) **European Patent Office**

**Office européen des brevets**

(11) Numéro de publication: **0 177 373**
**B1**

(12) **FASCICULE DE BREVET EUROPEEN**

(45) Date de publication du fascicule du brevet: **05.12.90**

(51) Int. Cl.⁵: **G 06 F 1/00**, G 06 F 11/00

(21) Numéro de dépôt: **85401149.1**

(22) Date de dépôt: **11.06.85**

(54) **Dispositif pour arrêter le déroulement des programmes en cours d'exécution dans un microprocesseur préalablement à la disparition de la tension d'alimentation du microprocesseur.**

(30) Priorité: **14.06.84 FR 8409309**

(43) Date de publication de la demande:
**09.04.86 Bulletin 86/15**

(45) Mention de la délivrance du brevet:
**05.12.90 Bulletin 90/49**

(84) Etats contractants désignés:
**AT BE CH DE GB IT LI LU NL SE**

(56) Documents cités:
**DE-A-2 936 683**
**FR-A-2 454 137**
**US-A-3 562 555**

(73) Titulaire: **THOMSON-LGT LABORATOIRE GENERAL DES TELECOMMUNICATIONS**
**51, boulevard de la République**
**F-78400 Chatou (FR)**

(72) Inventeur: **Nollet, Michel**
**THOMSON-CSF SCPI 173, bld Haussmann**
**F-75379 Paris Cedex 08 (FR)**

(74) Mandataire: **Lincot, Georges et al**
**THOMSON-CSF SCPI**
**F-92045 PARIS LA DEFENSE CEDEX 67 (FR)**

Courier Press, Leamington Spa, England.

EP 0 177 373 B1

## Description

La présente invention concerne un dispositif pour arrêter le déroulement des programmes en cours d'exécution dans un microprocesseur préalablement à la disparition de la tension d'alimentation du microprocesseur.

Il est connu de la façon par exemple décrite dans la demande de brevet FR A 2 454 137 d'appliquer une tension de commande sur l'entrée communément désignée par RESET d'un microprocesseur afin de réinitialiser ce dernier lors des coupures d'alimentation du secteur. Il est également connu, dans lecas où l'exécution d'un sous-programme de sauvegarde est nécessaire, d'appliquer cette tension de commande à un instant qui est différé par rapport à un instant de détection de la disparition du secteur d'un temps suffisant pour permettre l'exécution d'un programme de sauvegarde de l'instruction qui est en cours d'exécution.

Cette disposition présente cependant l'inconvénient qu'elle ne procure aucune sûreté quant au fonctionnement du microprocesseur lorsque la tension de sortie de l'alimentation vient à disparaître pour une cause autre que celle de la disparition de la tension secteur, cet évènement pouvant se produire dans le cas notamment, d'un court-circuit sur la sortie d'alimentation ou encore dans le cas d'un débranchement accidentel de la carte support du microprocesseur de son alimentation. Dans ces cas en effet, la tension de réinitialisation du microprocesseur ne peut être appliquée sur l'entrée RESET du fait que, la tension secteur est toujours présente et que la tension d'alimentation du microprocesseur disparait. Ceci entraîne un fonctionnement incertain du microprocesseur qui peut générer, sur son canal d'entrée-sortie, des données erratiques qui peuvent nuire au fonctionnement des dispositifs de réception couplés au microprocesseur par ce canal.

Dans le cas où l'exécution d'un sous-programme de sauvegarde n'est pas nécessaire, la disposition connue présente l'inconvénient supplémentaire de compliquer inutilement l'alimentation du microprocesseur, car il ne paraît pas indispensable dans ce cas de disposer d'un signal logique antérieur au début de la décroissance de la tension d'alimentation du microprocesseur alors qu'il suffirait seulement d'appliquer sur l'entrée RESET une tension logique égale à 0 volt aussitôt que la tension d'alimentation du microprocesseur vient à disparaître.

Le but de l'invention est de remédier aux inconvénients précités.

A cet effet, l'invention a pour objet, un dispositif pour arrêter le déroulement des programmes en cours d'exécution dans un microprocesseur muni d'une entrée RESET d'initialisation et d'une masse d'alimentation préalablement à la disparition de la tension d'alimentation du microprocesseur du type comprenant un circuit différentiateur branché en dérivation entre une ligne d'alimentation VA du microprocesseur et la masse d'alimentation du microprocesseur et un amplificateur de courant couplé entre le circuit différentiateur et l'entrée RESET du microprocesseur, caractérisé en ce qu'il comprend:

—un condensateur relié d'une part, en parallèle entre l'entrée RESET et la masse d'alimentation du microprocesseur et d'autre part, en série entre la ligne d'alimentation VA du microprocesseur et la masse d'alimentation au travers d'une résistance pour initialiser le microprocesseur lors de la diminution de la tension d'alimentation

—et en ce que le circuit différentiateur comporte des moyens pour commander l'amplificateur de courant afin de décharger rapidement le condensateur lorsque la tension d'alimentation commence à décroître.

Du document DE—A—2 936 683, il est connu d'appliquer une tension de commande sur l'entrée RESET d'un microprocesseur pour le réinitialiser lorsque la tension d'alimentation franchit une limite inférieure, le dispositif comprenant un condensateur relié d'une part, en parallèle entre l'entrée RESET et la masse d'alimentation du microprocesseur et d'autre part, en série entre la ligne d'alimentation du microprocesseur et la masse d'alimentation au travers d'une résistance.

Le dispositif selon l'invention a pour avantage qu'il permet d'appliquer sur la borne RESET du microprocesseur une tension logique égale à 0 volt aussitôt que la tension d'alimentation commence à décroître. Il a aussi pour avantage de permettre de rendre le microprocesseur solidaire de son système de protection, ceci pouvant être réalisé d'une façon simple en plaçant le microprocesseur et le système de protection à proximité l'un de l'autre sur la même carte support. La carte support du microprocesseur et de son système de protection pourra par conséquent, selon cette dernière configuration, être branchée et débranchée à volonté sur n'importe quelle source pouvant fournir la tension d'alimentation du microprocesseur même si cette source ne possède aucun système ou dispositif de surveillance du niveau de la tension d'alimentation.

D'autres caractéristiques et avantages de l'invention apparaîtront également à l'aide de la description faite au regard des dessins annexés donnés uniquement à titre d'exemple qui représentent:

—la figure 1 une réalisation du dispositif selon l'invention;

—la figure 2 une variante de réalisation du dispositif selon l'invention;

—la figure 3 une application du dispositif selon l'invention à la réalisation d'un dispositif de sauvegarde des instructions de programmes en cours d'exécution dans un microprocesseur lors des coupures de tension secteur.

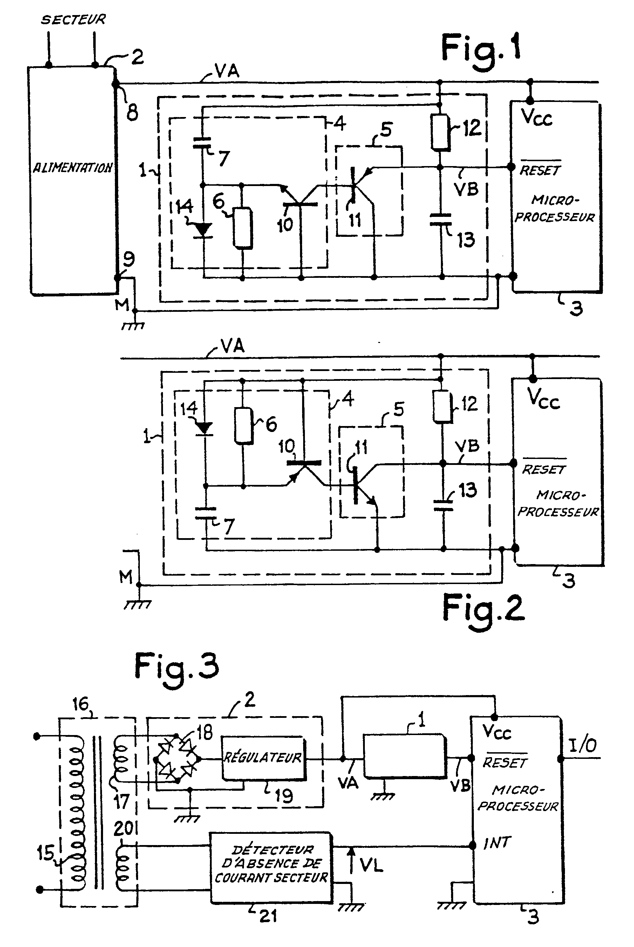

Le dispositif selon l'invention est représenté en 1 à la figure 1 à l'intérieur d'un rectangle en pointillés, connecté à la ligne d'alimentation en tension continue d'un microprocesseur 3, du type de ceux par exemple connus sous les désignations 8048/8049 commercialisés par la société SIGNETICS. Le dispositif 1 comprend un circuit différentiateur 4 et un amplificateur de courant 5 représentés également à l'intérieur de lignes en pointillées. Le circuit différentiateur 4 est constitué par une résistance 6 et un condensateur 7 reliés en série entre des bornes 8 et 9 de sortie en courant et en tension continue de l'alimentation 2 et un transistor 10. L'amplificateur de courant 5 comprend un transistor 11. Le transistor 10 est du type NPN et est relié par sa base d'une part, à la borne 9 de l'alimentation 2 et d'autre part, à une extrémité d'une résistance 6 qui n'est pas commune avec l'extrémité du condensateur 7, par l'intermédiaire d'une ligne de masse M du dispositif. Le transistor 11 de type PNP est relié par sa base au collecteur du transistor 10 et par son collecteur à la ligne de masse M du dispositif, L'émetteur du transistor 11 est relié, d'une part, à l'entrée RESET du microprocesseur 3 et d'autre part, à la borne 8 de l'alimentation 2 par l'intermédiaire d'une résistance 12 qui dans le cas des microprocesseurs 8048/8049 est intégrée dans le microprocesseur. Un condensateur 13 est branché en parallèle entre l'émetteur du transistor 11 et la ligne de masse M du dispositif, et une diode 14 est montée en parallèle entre les extrémités de la résistance 6, l'anode de la diode 14 étant reliée au point commun à la résistance 6 et au condensateur 7, la cathode de la diode 14 étant reliée à la ligne de masse M du dispositif.

Le fonctionnement du dispositif qui vient d'être décrit est le suivant. Au moment de la mise sous tension, l'initialisation du microprocesseur 3 est réalisée au moyen du condensateur 13 qui se charge au travers de la résistance 12 au niveau de potentiel continu VA fourni sur la borne 8 de l'alimentation 2, le condensateur 7 se charge également au niveau de potentiel VA au travers de la diode 14 puis de la résistance 6. En régime établi, lorsque le potentiel VA fourni par l'alimentation stabilisée garde une valeur à peu près constante, l'entrée RESET du microprocesseur est portée au niveau de potentiel VA et le point commun au condensateur 7 et à la résistance 6 est porté au potentiel de la ligne de masse M du dispositif. Lorsque pour une cause quelconque, le potentiel VA commence à diminuer, les variations instantanées du potentiel VA sont transmises par le condensateur 7 au point commun à la résistance 6 et au condensateur 7 de sorte que, le potentiel en ce point commun est porté à un niveau qui est négatif par rapport à la ligne de masse M ce qui provoque l'apparition d'un courant dans l'espace collecteur-émetteur du transistor 10, ce courant étant amplifié par le transistor 11 qui décharge très rapidement le condensateur 13 dans son espace collecteur-émetteur et place au potentiel de la ligne de masse M l'entrée RESET du microprocesseur 3. La mise au potentiel de masse de l'entrée RESET provoque la remise à zéro du compteur de programme du microprocesseur 3 et la réinitialisation des circuits internes au microprocesseur en interrompant le programme qui est en cours d'exécution.

Pour obtenir un fonctionnement optimum du dispositif qui vient d'être décrit il est nécessaire de donner aux condensateurs 7 et 13 ainsi qu'au transistor 11 des caractéristiques telles que l'on puisse obtenir une décroissance de la tension appliquée sur la borne RESET du microprocesseur 3 bien plus rapide que la décroissance du potentiel VA fourni par l'alimentation stabilisée 2. Si VB désigne le potentiel qui est appliqué par l'émetteur du transistor 11 sur l'entrée RESET du microprocesseur 3, la condition qui vient d'être énoncée s'écrit

$$\left| \frac{dVB}{dT} \right| \gg \left| \frac{dVA}{dT} \right| \qquad (1).$$

En désignant par $C_3$ la capacité du condensateur 13, par $\beta$ le gain en courant du transistor 11 et par $C_2$ la capacité du condensateur 7 l'expression du courant I traversant le condensateur 13 peut être mise sous la forme:

$$I = C_3 \frac{dVB}{dT} = \beta \times C_2 \frac{dVA}{dT}$$

ce qui implique la relation

$$\frac{dVB}{dt} \Big/ \frac{dVA}{dt} = \frac{\beta \cdot C_2}{C_3}.$$

La relation (1) apparaît donc vérifiée si entre les valeurs de $\beta$, $C_2$ et $C_3$ existe la relation

$$\frac{\beta \cdot C_2}{C_3} \gg 1.$$

En pratique il est suffisant de choisir pour $\beta$, $C_2$ et $C_3$ des valeurs telles que la relation

$$\frac{\beta \cdot C_2}{C_3} \geq 10$$

soit satisfaite. Par exemple, les conditions précédentes pourront être vérifiées en choisissant pour $C_3$ une valeur de 1 microfarad, pour $\beta$ une valeur plus grande ou égale à 100 et pour $C_2$ une valeur plus grande ou égale à 0,1 microfarad.

Dans l'exemple qui vient d'être décrit la résistance 6 assure la charge du condensateur 7 entre une tension VA—0,6 volts et la tension VA nominale de d'alimentation, les 0,6 volts correspondent au seuil de la diode 14 si elle est au silicium.

Dans ces conditions, la variation admissible du potentiel VA fourni par l'alimentation 2 sans qu'il y ait d'initialisation du microprocesseur 3 est égale au seuil de la jonction base-émetteur du transistor 10, soit 0,6 V si le transistor 10 est au silicium. Si l'on omet la résistance 6, la variation admissible du potentiel VA est théoriquement égale à la somme des tensions de seuil de la diode 14 et de la jonction base-émetteur du transistor 10 (1,2 V si la diode 14 et le transistor 10 sont au silicium) mais pratiquement les résistances de fuite de la diode 14, de la jonction base-émetteur du transistor 10 et du condensateur 7, combinées, ramèneront la variation admissible de VA à une valeur comprise entre la tension de seuil de la jonction base-émetteur du transistor 10 et de la diode 14. Cette valeur étant bornée mais indéterminée, il est conseillé, si l'on veut obtenir une variation admissible de VA plus grande que la tension de seuil de la jonction base-émetteur du transistor 10, non pas de supprimer la résistance 6, mais d'ajouter, entre l'émetteur du transistor 10 et le point commun du condensateur 7, et de la résistance 6, une ou plusieurs diodes en série (anode du côté de l'émetteur du transistor 10). Les variations admissibles du potentiel de VA sont alors égales à la somme des tensions de seuil des diodes rajoutées et de la jonction base-émetteur du transistor 10.

L'invention n'est pas limitée à l'exemple de réalisation qui vient d'être décrit, il est bien évident que d'autres modes de réalisation sont encore possibles sans pour autant sortir du cadre et de la portée de l'invention. Notamment un dispositif selon l'invention équivalent à celui qui vient d'être décrit pourra être obtenu à l'aide de transistors 10 et 11 complémentaires de ceux utilisés pour réaliser le dispositif de la figure 1, le montage correspondant étant représenté à la figure 2. Dans ce cas le collecteur du transistor 11 doit être branché à l'entrée RESET du microprocesseur 3 et l'ordre de branchement de la résistance 6 et du condensateur 7 aux bornes 8 et 9 de l'alimentation 2 doit être permuté. Dans ce cas également, l'anode de la diode 14 doit être reliée à la borne 8 de l'alimentation 2, sa cathode restant branchée au point commun entre la résistance 6 et le condensateur 7 pour permettre la charge du condensateur 7 au travers de la diode 14.

Selon encore un autre mode de réalisation de l'invention, une réponse encore plus rapide du dispositif pourra être obtenue en remplaçant par exemple le transistor 11 par deux transistors couplés entre eux pour former un amplificateur du type connu sous le nom DARLINGTON afin d'obtenir un gain de courant très élevé.

Une utilisation du dispositif selon l'invention à la sauvegarde des programmes en cours d'exécution dans un microprocesseur lorsqu'apparaît une coupure de secteur est maintenant décrite à l'aide du schéma d'utilisation représenté à la figure 3. Sur la figure 3 l'alimentation 2 est reliée au secteur par l'intermédiaire d'un enroulement primaire 15 d'un transformateur 16 couplé à l'alimentation 2 par un enroulement secondaire 17. L'alimentation 2 comprend, de façon connue, un pont redresseur 18 alimenté par l'enroulement secondaire 17 et un régulateur 19 alimenté par les sorties du pont redresseur 18. Le transformateur 16 possède un deuxième enroulement secondaire 20 qui alimente un détecteur d'absence de courant secteur 21, le détecteur 21 ayant pour fonction d'appliquer une tension VL constante sur l'entrée d'interruption INT du microprocesseur 3. Comme expliqué précédemment, la sortie du dispositif 1 de l'invention est reliée à l'entrée RESET du microprocesseur 3. Lorsqu'intervient une coupure de tension secteur, cette coupure est détectée par le détecteur d'absence de tension secteur 21 qui applique en réaction un niveau de tension nul sur l'entrée INT du microprocesseur 3 ce qui interrompt le programme en cours d'exécution et met en route le sous-programme de sauvegarde. Comme le régulateur 19 comprend de façon connue mais non représentée une cellule de filtrage placée en amont de la régulation, l'interruption de la tension secteur n'est pas répercutée instantanément sur la sortie du régulateur 19. Pendant un laps de temps, déterminé par la capacité de stockage d'énergie du régulateur 19, la tension VA reste maintenue constante à la sortie du régulateur 19 permettant au dispositif 1 de maintenir la tension de sortie VB à un potentiel logique 1 sur l'entrée RESET du microprocesseur 3 aussi longtemps que la tension VA est constante. Le délai entre l'interruption provoquée par le détecteur d'absence du secteur et la mise à 0 du RESET est donc aussi grand que possible, puisqu'il est égal au délai entre l'action du détecteur d'absence du secteur et le début de baisse de la tension d'alimentation VA du microprocesseur. Or, il est important que le délai entre l'interruption provoquée par le détecteur d'absence du secteur et à la mise à 0 du RESET soit le plus grand possible puisque c'est ce délai qui est mis à profit pour exécuter un programme de sauvegarde de l'instruction qui est en cours d'exécution dans le microprocesseur 3 en exécutant une instruction d'entrée-sortie qui vide les contenus des registres du microprocesseur sur le bus d'entrée-sortie IO à destination d'un organe de stockage extérieur non représenté.

**Revendications**

1. Dispositif (1) pour arrêter le déroulement des programmes en cours d'exécution dans un microprocesseur (3) muni d'une entrée RESET d'initialisation et d'une masse d'alimentation préalablement à la disparition de la tension d'alimentation du microprocesseur (3), du type comprenant un circuit différentiateur (4) branché en dérivation entre une ligne d'alimentation VA du microprocesseur (3) et la masse d'alimentation du microprocesseur et un amplificateur de courant (5) couplé entre le circuit différentiateur et l'entrée RESET du microprocesseur (3), caractérisé en ce qu'il comprend:

—un condensateur (13) relié d'une part, en parallèle entre l'entrée RESET et la masse d'alimentation du microprocesseur (3) et d'autre part, en série entre la ligne d'alimentation VA du microprocesseur (3) et la masse d'alimentation au travers d'une résistance (12) pour initialiser le microprocesseur (3) lors de la diminution de la tension d'alimentation

—et en ce que le circuit différentiateur (4) comporte des moyens (14, 10) pour commander l'amplificateur de courant afin de décharger rapidement le condensateur (13) lorsque la tension d'alimentation commence à décroître.

2. Dispositif selon la revendication 1, caractérisé en ce que l'amplificateur de courant (5) est constitué par un transistor (11) placé entre l'entrée RESET et la masse de l'alimentation commandé sur sa base par la sortie du circuit différentiateur.

3. Dispositif selon la revendication 2, caractérisé en ce que la sortie de l'amplificateur de courant (5) est reliée aux extrémités communes d'une résistance (12) et d'un condensateur (13) branchées en série entre la ligne d'alimentation VA et la masse, l'extrémité non commune du condensateur (13) étant reliée à la masse d'alimentation (2).

4. Dispositif selon la revendication 3, caractérisé en ce que le circuit différentiateur (4) comprend une résistance (6) et un condensateur (7) montés en série aux bornes de l'alimentation (2) du microprocesseur (3), les extrémités communes au condensateur et à la résistance étant reliées à l'émetteur d'un transistor monté entre les extrémités communes au condensateur (7) et à la résistance (6) et la base du transistor amplificateur (11).

5. Dispositif selon la revendication 4, caractérisé en ce que la valeur du condensateur (7) du circuit différentiateur (4) et la valeur du condensateur (13) branché entre la sortie RESET et la masse, sont liées par la relation

$$\frac{\beta \cdot C_2}{C_3} \geqslant 10$$

où β représente le gain en courant de l'amplificateur de courant (5), $C_2$ désigne la capacité du condensateur (7) du circuit différentiateur (4) et $C_3$ désigne la capacité du condensateur (13) branché à la sortie de l'amplificateur de courant.

6. Dispositif selon la revendication 5, caractérisé en ce que le gain en courant est obtenu au moyen de deux transistors couplés ensemble suivant le montage DARLINGTON.

7. Utilisation du dispositif selon la revendication 1 à la réalisation d'un dispositif de sauvegarde des instructions de programmes en cours d'exécution dans un microprocesseur (3) lors des coupures de tension de secteur, le dispositif de sauvegarde comprenant un détecteur d'absence de courant secteur (21) branché entre la borne de commande INT d'interruption du microprocesseur (3) et l'amenée d'alimentation secteur de l'alimentation (2).

**Patentansprüche**

1. Vorrichtung (1) zum Anhalten des Ablaufs der in einem Mikroprozessor (3) gerade ausgeführten Programme, der mit einem Initialisierungseingang RESET und mit einer Versorgungsmasse versehen ist, vor dem Verschwinden der Versorgungsspannung des Mikroprozessors (3), vom Typ mit einer Differenzierschaltung (4), welche zwischen eine Versorgungsleitung VA des Mikroprozessors (3) und die Versorgungsmasse des Mikroprozessors geschaltet ist, und einem Stromverstärker (5), der zwischen die Differenzierschaltung und den Eingang RESET des Mikroprozessors (3) gekoppelt ist, dadurch gekennzeichnet, daß sie:

—einen Kondensator (13) umfaßt, der einerseits parallel zwischen den Eingang RESET und die Versorgungsmasse des Mikroprozessors (3) und andererseits in Reihe zwischen die Versorgungsleitung VA des Mikroprozessors (3) und die Versorgungsmasse über einen Widerstand (12) geschaltet ist, um den Mikroprozessor (3) während der Herabsetzung der Versorgungsspannung zu initialisieren,

—und daß die Differenzierschaltung (4) Mittel (14, 10) für die Steuerung des Stromverstärkers umfaßt, um den Kondensator (13) schnell zu entladen, wenn die Versorgungsspannung anfängt, schwächer zu werden.

2. Vorrichtung nach Anspruch 1, dadurch gekennzeichnet, daß der Stromverstärker (5) aus einem Transistor (11) besteht, der zwischen dem Eingang RESET und der Versorgungsmasse angeordnet und an seiner Basis durch den Ausgang der Differenzierschaltung gesteuert ist.

3. Vorrichtung nach Anspruch 2, dadurch gekennzeichnet, daß der Ausgang des Stromverstärkers (5) mit den gemeinsamen Enden eines Widerstandes (12) und eines Kondensators (13) verbunden ist, die zwischen der Versorgungsleitung VA und der Masse in Serie geschaltet sind, wobei das nicht gemeinsame Ende des Kondensators (13) mit der Versorgungsmasse (2) verbunden ist.

4. Vorrichtung nach Anspruch 3, dadurch gekennzeichnet, daß die Differenzierschaltung (4) einen Widerstand (6) sowie einen Kondensator (7) umfaßt, die an den Versorgungsanschlüssen (2) des Mikroprozessors (3) in Serie geschaltet sind, wobei die dem Kondensator und dem Widerstand gemeinsamen Enden mit dem Emitter eines Transistors, der zwischen die dem Kondensator (7) und dem Widerstand (6) gemeinsamen Enden und die Basis des Verstärkungs-Transistors (11) geschaltet ist, verbunden sind.

5. Vorrichtung nach Anspruch 4, dadurch gekennzeichnet, daß der Wert des Kondensators (7) der Differenzierschaltung (4) und der Wert des zwischen dem Ausgang RESET und der Masse angeschlossenen Kondensators (13) durch die Beziehung

$$\frac{\beta \cdot C_2}{C_3} \geqslant 10$$

verknüpft sind, worin β die Stromverstärkung des Stromverstärkers (5) darstellt, $C_2$ die Kapazität des Kondensators (7) der Differenzierschaltung (4) und $C_3$ die Kapazität des Kondensators (13), der am Ausgang des Stromverstärkers angeschlossen ist.

6. Vorrichtung nach Anspruch 5, dadurch gekennzeichnet, daß die Stromverstärkung mittels zwei Transistoren erhalten wird, die in DARLINGTON-Schaltung miteinander gekoppelt sind.

7. Anwendung der Vorrichtung nach Anspruch 1 für die Ausführung einer Vorrichtung zur Rettung der Befehle der in einem Mikroprozessor (3) gerade ausgeführten Programme während der Unterbrechungen der Netzspannung, wobei die Schutzvorrichtung einen Netzausfall-Detektor (21) aufweist, der zwischen dem Anschluß INT zum Steuern der Unterbrechung des Mikroprozessors (3) und dem Netzanschluß der Stromversorgung (2) angeschlossen ist.

**Claims**

1. A device (1) for halting the running of programs being executed in a microprocessor (3) provided with an initializing RESET input and with a supply ground prior to the discontinuance of the supply voltage of the microprocessor (3), of the type comprising a differentiating circuit (4) connected by way of diversion between a supply line VA of the microprocessor (3) and the supply ground of the microprocessor and a current amplifier (5) coupled between the differentiating circuit and the RESET input of the microprocessor (3), characterized in that it comprises:
—a capacitor (13) connected on the one hand in parallel between the said RESET input and the supply ground of the microprocessor (3) and on the other hand in series between the supply line VA of the microprocessor (3) and the supply ground through a resistor (12) in order to initialize the microprocessor (3) at the time the supply voltage decreases,
—and in that the differentiating circuit (4) comprises means (14 and 10) in order to control the current amplifier in order to rapidly discharge the capacitor (13) when the supply voltage begins to diminish.

2. The device as claimed in claim 1, characterized in that the current amplifier (5) is constituted by a transistor (11) placed between the RESET input and the supply ground controlled at its base by the output of the differentiating circuit.

3. The device as claimed in claim 2, characterized in that the output of the current amplifier (5) is connected with the common ends of a resistor (12) and of capacitor (13) placed in series between the supply line VA and ground, the non-common end of the capacitor (13) being connected with the supply ground (2).

4. The device as claimed in claim 3, characterized in that the differentiating circuit (4) comprises a resistor (6) and a capacitor (7) mounted in series with the supply terminals (2) of the microprocessor (3), the ends common to the capacitor and the resistor being connected with the emitter of a transistor placed between the ends common to the capacitor (7) and to the resistor (6) and the base of the amplifying transistor (11).

5. The device as claimed in claim 4, characterized in that the value of the capacitor (7) of the differentiating circuit (4) and the value of the capacitor (13) placed between the RESET output and ground bear the following relationship to each other

$$\frac{\beta \cdot C_2}{C_3} \geq 10,$$

wherein β represents the current gain of the current amplifier (5), $C_2$ is the capacitance of the capacitor (7) of the differentiating circuit (4) and $C_3$ denotes the capacity of the capacitor (13) connected with the output of the current amplifier.

6. The device as claimed in claim 5, characterized in that the current gain is obtained by means of two transistors placed in a Darlington circuit.

7. The use of the device as claimed in claim 1 for a data security device for the instructions of programs in the course of execution in a microprocessor (3) at the time of line supply failure, the security device comprising a line voltage failure detector (21) connected between the control terminal INT for interruption of the microprocessor (3) and the supply line input of the supply (2).

**EP 0 177 373 B1**

Fig.1

Fig.2

Fig.3